# DEMANDE DE BREVET EUROPEEN

(11) **EP 4 052 857 A1**
(43) Date de publication de la demande: **07.09.2022**
(21) Numéro de dépôt: 22159324.7
(22) Date de dépôt: 01.03.2022
(51) Int. Cl.: B25H 3/00, A47J 47/16, A47B 81/04, A47F 7/00

(54) **SYSTÈME DE STOCKAGE POUR UN USTENSILE ET ASSEMBLAGE D'UN TEL SYSTÈME SUR UN SUPPORT**

(30) Priorité: 02.03.2021 FR 2102030
(71) Demandeur: Antaraix Prod, 13490 Jouques (FR)
(72) Inventeur: MALESINSKI, Pascal, 13490 Jouques (FR)
(74) Mandataire: LLR

(57) **Abrégé**

L'invention se rapporte à un système (5) de stockage pour au moins un ustensile comportant un dispositif (7) de fixation destiné à être solidarisé à un support (3) et comprenant au moins deux entretoises (12) destinées à former un interstice (I) pour permettre l'introduction de l'ustensile entre les entretoises (12) du système (5) de stockage et un dispositif (9) de blocage élastique de l'ustensile monté entre deux entretoises (12) du dispositif (7) de fixation et destiné à retenir suspendu l'ustensile par une force élastique en opposition au poids de l'ustensile afin de plaquer élastiquement l'ustensile suspendu vers le support (3).

## Description

### DOMAINE TECHNIQUE DE L'INVENTION

L'invention concerne un système de stockage pour un ustensile et un assemblage d'un tel système sur un support tel qu'un mur ou un ouvrant.

### ARRIÈRE-PLAN TECHNIQUE DE L'INVENTION

Dans les activités domestiques, de nombreux ustensiles sont utilisées plus ou moins souvent. Il est donc nécessaire de les stocker quand ils ne sont pas utilisés. Toutefois, certains ustensiles sont difficilement empilables, soit à cause d'une surface principale très grande au regard de son épaisseur (comme un couvercle ou une brosse), soit à cause d'une courbure marquée (comme une spatule, une louche ou un tournevis), ce qui rend très difficile de leur stockage.

### RÉSUMÉ DE L'INVENTION

L'invention a notamment pour but de proposer un système de stockage simple et robuste permettant d'entreposer de manière aisée un (ou plusieurs) ustensile(s) difficilement empilable(s) et de forme(s) variée(s) à l'aide d'une seule main aussi bien pour l'entrer que pour le sortir du système de stockage.

À cet effet, l'invention se rapporte à un système de stockage pour au moins un ustensile, **caractérisé en ce qu'**il comporte un dispositif de fixation destiné à être solidarisé à un support et comprenant au moins deux entretoises dont une dimension, appelée longueur, est destinée à former un interstice par rapport au support pour permettre l'introduction de l'ustensile entre les entretoises du système de stockage perpendiculairement par rapport à la longueur des entretoises, et un dispositif de blocage élastique de l'ustensile monté entre deux entretoises du dispositif de fixation et destiné à retenir suspendu l'ustensile par une force élastique en opposition au poids de l'ustensile afin de plaquer élastiquement l'ustensile suspendu vers le support.

Avantageusement selon l'invention, le placage élastique de l'ustensile vers le support peut être de manière directe (contre le support) ou indirecte (contre une pièce intermédiaire comme un organe du dispositif de fixation) ce qui permet le déplacement solidaire de l'ustensile avec le support sans bruit généré par la percussion de l'ustensile contre le support et/ou contre le dispositif de fixation. En outre, l'ustensile peut être rangé le long du support en limitant l'épaisseur totale à sensiblement celle de l'ustensile.

On comprend également que l'interstice n'a pas à être surdimensionné pour accepter différents formats d'ustensiles, c'est la détente élastique du dispositif de blocage élastique qui s'adapte à l'épaisseur de l'ustensile. Typiquement, dans le cas d'un couvercle de casserole, plusieurs diamètres différents et/ou plusieurs rayons de concavité différents pourront être reçus par le même système de stockage.

L'invention peut également comporter l'une ou plusieurs des caractéristiques optionnelles suivantes, prises seules ou en combinaison.

L'interstice formé peut présenter une distance comprise entre 1 mm et 30 mm. Ainsi, l'interstice peut être de distance constante ou variable entre les deux entretoises du dispositif de fixation. Typiquement, les entretoises peuvent être de longueurs différentes et/ou une partie du dispositif de blocage élastique montée entre les deux entretoises peut ne pas être rectiligne sans sortir du cadre de l'invention.

Le dispositif de fixation peut comporter au moins une base destinée à fixer le système de stockage au support. Cela signifie qu'une base unique peut être solidaire des deux entretoises ou qu'une base séparée est prévue pour chaque entretoise. Ainsi, suivant l'application et notamment suivant l'écartement nécessaire entre les entretoises, une base reliant les deux entretoises peut être prévue ou, alternativement, deux bases comprenant chacune une entretoise, comme par exemple en forme d'équerres, peuvent être prévues permettant que leur écartement soit défini par leur distance relative de fixation. Chaque base peut ainsi être fixée au support par exemple par collage et/ou par vissage et/ou par vide relatif et/ou par attraction magnétique. Typiquement, une bande adhésive double face, un ensemble trou (dans la base) - vis, une ventouse et un aimant peuvent être utilisés seuls ou en combinaison pour rendre solidaire le système de stockage avec le support.

Le dispositif de blocage élastique comporte préférentiellement au moins un élément élastique monté entre deux entretoises du dispositif de fixation. On comprend qu'un déplacement de l'ustensile sensiblement perpendiculairement à la longueur des deux entretoises pour l'entrer dans le système de stockage exerce un étirement de l'élément élastique apte à s'adapter aux dimensions de l'ustensile et à plaquer ce dernier contre le support.

De manière additionnelle ou substitutionnelle, le dispositif de blocage élastique peut comporter au moins un élément élastique aménagé dans au moins une des entretoises du dispositif de fixation. On comprend alors qu'au moins une entretoise aurait, seule ou avec l'aide d'au moins un élément élastique entre deux entretoises, le rôle de se déformer pour adapter le déplacement élastique de placage. Il est également immédiat que la modification élastique de la distance de l'interstice adapté à chaque ustensile reçu dans le système de stockage serait orientée sensiblement le long de la longueur des entretoises.

Le dispositif de blocage élastique peut également comporter en outre au moins un élément rigide destiné par exemple à fixer l'élément élastique ou à servir de butée pour l'ustensile. Typiquement, une goupille ou une agrafe peut permettre à au moins une partie de l'élément élastique d'être attaché à une des entretoises. Il est également possible, qu'une plaque de protection soit montée intercalée entre deux éléments élastiques pour ne pas les détériorer par contact contre chaque ustensile et/ou qu'une plaque de fixation soit utilisée à au moins une extrémité d'un élément élastique pour solidariser ce dernier à au moins une entretoise.

Le dispositif de blocage élastique peut comporter plusieurs éléments élastiques ce qui permet d'améliorer la force de placage et offre une meilleure limitation des déplacements relatifs entre l'ustensile reçu dans le système de stockage et le support typiquement dans le cas où ce dernier est mobile. On comprend donc que le dispositif de blocage élastique forme ainsi plusieurs moyens de réception élastiques à des niveaux différents (deux ou plus) sensiblement perpendiculaires à la longueur des entretoises. Il est donc possible de former deux éléments élastiques à partir d'un cordon élastique unique (par exemple un câble ou un brin sandow) monté en boucle entre les deux entretoises ou par deux cordons élastiques montés indépendamment entre les deux entretoises.

Suivant l'application, la distance entre deux entretoises du dispositif de fixation entre lesquelles est reçu chaque ustensile peut être comprise entre 15 cm et 50 cm. Bien entendu, la distance pourrait être plus courte ou plus longue sans sortir du cadre de l'invention.

L'invention se rapporte également à un assemblage d'un support avec un système de stockage tel que présenté plus haut, le support étant un mur ou un ouvrant. Avantageusement selon l'invention, l'invention permet ainsi de stocker un (ou plusieurs) ustensile(s) sur un support fixe ou mobile. Le support peut ainsi être vertical ou incliné (comme par exemple un mur mansardé) voire sensiblement horizontal sans que la capacité de placage soit perdue. Il est ainsi possible de stocker un ustensile sur une porte battante (charnière, gond, etc.), une porte coulissante (coulisse, rail, etc.) ou une porte de placard de cuisine déplaçable via un mécanisme à plusieurs articulations (compas, structure à cinématique complexe, etc.) sans que l'ustensile quitte le système de stockage.

### BRÈVE DESCRIPTION DES DESSINS

D'autres particularités et avantages de l'invention ressortiront clairement de la description qui en est faite ci-après, à titre indicatif et nullement limitatif, en référence aux dessins annexés, dans lesquels :
- la figure 1 est une vue schématique d'un premier mode de réalisation de système de stockage selon l'invention ;
- la figure 2 est une vue schématique d'un deuxième mode de réalisation de système de stockage selon l'invention recevant un couvercle ;
- la figure 3 est une vue partielle et agrandie de la figure 2 centrée sur l'interface entre le dispositif de fixation et le dispositif de blocage élastique ;
- la figure 4 est une vue schématique d'une variante d'interface entre le dispositif de fixation et le dispositif de blocage élastique du deuxième mode de réalisation de l'invention

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionnés d'un indice. La description de leur structure et de leur fonction n'est donc pas systématiquement reprise.

Dans tout ce qui suit, les orientations sont les orientations des figures. En particulier, les termes « supérieur », « inférieur », « gauche », « droit », « au-dessus », « en-dessous », « vers l'avant » et « vers l'arrière » s'entendent généralement par rapport au sens de représentation des figures.

Par « ustensile 1 », on entend tous les types d'objets pouvant servir par exemple aux activités domestiques telles que la cuisine, le ménage, le lavage corporel ou le bricolage. À titre d'exemple nullement limitatif, l'ustensile 1 peut ainsi être un couvercle, une brosse, un outil ou un contenant destiné par exemple à recevoir un produit à base de savon et/ou de détergent. Bien entendu, l'invention pourrait s'appliquer à d'autres types d'ustensiles 1 sans sortir du cadre de l'invention.

L'invention se rapporte généralement à un assemblage entre un support 3 quelconque avec un système 5 de stockage (objet principal de l'invention) de construction simple et robuste permettant d'entreposer suspendu de manière aisée un (ou plusieurs) ustensile(s) 1 difficilement empilable(s) et de forme(s) variée(s) à l'aide d'une seule main aussi bien pour l'entrer dans le système 5 de stockage que pour le sortir du système 5 de stockage afin de garantir une manipulation facilitée de chaque ustensile 1 au moment où l'utilisateur en a besoin.

Le support 3 n'a pas de réelle restriction à respecter. À titre d'exemple, il peut être aussi bien fixe tel qu'un mur ou mobile tel qu'un ouvrant. Le support 3 peut ainsi présenter une surface qui peut aussi être verticale ou inclinée (comme par exemple un mur mansardé) voire sensiblement horizontale sans que la capacité de placage soit perdue. Il est aussi possible de stocker un (ou plusieurs) ustensile(s) 1 suspendu sur une porte battante (par exemple à l'aide d'une charnière, d'un gond, etc.), sur une porte coulissante (par exemple à l'aide d'une coulisse, d'un rail, etc.) ou sur une porte déplaçable via un mécanisme à plusieurs articulations (par exemple d'un placard de cuisine à l'aide d'un compas, d'une structure à cinématique complexe, etc.) sans que chaque ustensile 1 suspendu quitte le système 5 de stockage.

À cet effet, le système 5 de stockage selon l'invention comporte principalement un dispositif 7 de fixation et un dispositif 9 de blocage élastique. Le dispositif 7 de fixation est destiné à être solidarisé au support 3 afin d'y attacher le système 5 de stockage. Il peut être formé à partir d'une grande variétés de matériaux sans sortir du cadre de l'invention suivant le type de support 3 sur lequel il est monté et s'il est fixé à un endroit normalement caché comme par exemple dans un meuble. On comprend par exemple que s'il est prévu que le système 5 de stockage soit visible en permanence, un matériau ou un revêtement esthétiquement plus avantageux peut être préférablement choisi. Selon une autre logique, s'il est prévu que le système 5 de stockage soit monté dans un milieu agressif (produit chimique, humidité, etc.), un matériau ou un revêtement chimiquement ou physiquement très stable peut être préférablement choisi. À titre d'exemple nullement limitatif, le dispositif 7 de fixation peut ainsi être formé à base de métal tel que de l'aluminium ou de l'acier inoxydable, de bois tel que du bambou, de plastique, de verre, de cristal, de pierre, de céramique comme du granit en terre cuite, de la porcelaine ou de la faïence.

Le dispositif 7 de fixation comporte préférentiellement au moins une base 11 et au moins deux entretoises 12 qui peuvent être ou non monoblocs, c'est-à-dire former ou non une seule et même pièce sans discontinuité de matière. Cela signifie qu'une base 11 unique peut être solidaire des deux entretoises 12 ou qu'une base 11 séparée est prévue pour chaque entretoise 12. Ainsi, suivant l'application et notamment suivant l'écartement E nécessaire entre les entretoises 12, une base 11 reliant les deux entretoises 12 peut être prévue ou, alternativement, deux bases 11 comprenant chacune une entretoise 12, comme par exemple en forme d'équerres, peuvent être prévues permettant que leur écartement E soit défini par leur distance relative de fixation.

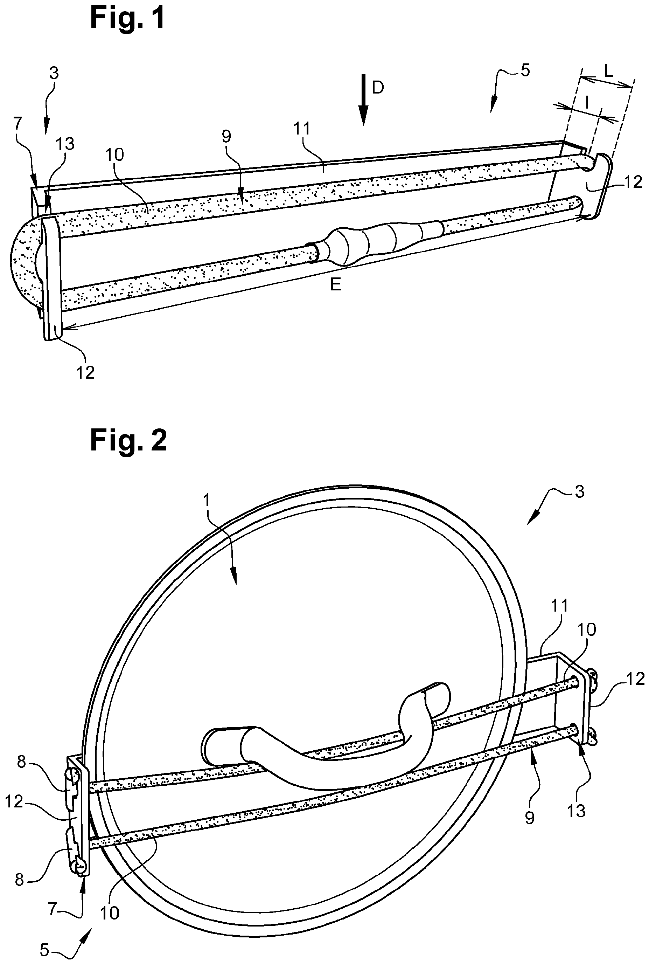

Typiquement, dans les exemples illustrés aux figures 1 à 4, le dispositif 7 de fixation comporte une base 11 unique reliant deux entretoises 12 de manière sensiblement perpendiculaire et monobloc. Le dispositif 7 de fixation dans cet exemple particulier est une lame d'acier inoxydable laminée et pliée aux extrémités afin de former les entretoises 12. Dans cet exemple particulier à base 11 unique, il a été trouvé qu'un écartement E, c'est-à-dire la distance entre deux entretoises 12 du dispositif 7 de fixation, compris entre 15 cm et 50 cm donnait satisfaction dans la majorité des ustensiles 1 utilisés. Bien entendu, l'écartement E pourrait être plus court ou plus long sans sortir du cadre de l'invention.

Chaque base 11 est destinée à fixer le système 5 de stockage au support 3. Par conséquent, la (ou les) base(s) 11 est préférentiellement de forme complémentaire avec la surface de réception du support 3. Dans les exemples illustrés aux figures 1 à 4, le support 3 étant une porte de placard battante d'un meuble de cuisine, la base 11 est donc une plaque rectangulaire sensiblement plane. Chaque base 11 peut ainsi être fixée au support 3 selon une grande variété de méthode. À titre d'exemple nullement limitatif, chaque base 11 peut ainsi être fixée au support 3 par collage et/ou par vissage et/ou par vide relatif et/ou par attraction magnétique. Typiquement, une bande adhésive double face, un ensemble trou (dans la base 11) - vis, une ventouse et un aimant peuvent être utilisés seuls ou en combinaison pour rendre solidaire le système 5 de stockage avec le support 3. Bien entendu, d'autres types de fixation comme par exemple à velcro peuvent être envisagés sans sortir du cadre de l'invention.

Chaque entretoise 12 présente une dimension, appelée longueur L, destinée à former un interstice I par rapport au support 3 (en combinaison avec le dispositif 9 de blocage élastique comme expliqué ci-dessous) pour permettre l'introduction de l'ustensile 1 entre les entretoises 12 du système 5 de stockage perpendiculairement par rapport à la longueur L des entretoises selon la direction D.

Le dispositif 9 de blocage élastique est monté entre deux des entretoises 12 du dispositif 7 de fixation afin de plaquer élastiquement chaque ustensile 1 suspendu vers le support 3 de manière directe ou indirecte. En effet, suivant qu'une ou plusieurs bases 11 soit utilisée, avantageusement selon l'invention, le placage élastique de chaque ustensile 1 suspendu peut être effectuée contre la surface du support 3 lui-même ou contre une partie intermédiaire fixée au support 3 comme par exemple une base 11 du dispositif 7 de fixation. Le montage du dispositif 9 de blocage élastique entre deux des entretoises 12 du dispositif 7 de fixation est destiné à retenir suspendu chaque ustensile 1 par une force élastique en opposition au poids de chaque ustensile 1.

Avantageusement selon l'invention, le placage élastique de chaque ustensile 1 vers le support 3 permet, dans le cas où le support 3 est mobile, le déplacement solidaire de chaque ustensile 1 suspendu avec le support 3 sans bruit généré par la percussion de chaque ustensile 1 suspendu contre le support 3 et/ou contre la partie intermédiaire fixée au support 3 comme par exemple une base 11 du dispositif 7 de fixation.

En outre, chaque ustensile 1 difficilement empilable(s) et de forme(s) variée(s) peut être avantageusement rangé suspendu le long du support 3 en limitant l'épaisseur totale à sensiblement celle de chaque ustensile 1. Ainsi, dans les exemples illustrés aux figures 1 à 4, on peut voir un couvercle 1 dont le diamètre est très supérieur par rapport à son épaisseur qui le rend très difficile à empiler avec un autre ustensile dans un placard ou un tiroir et qui posé à plat prend beaucoup de place. Avantageusement selon l'invention, il est ainsi possible, grâce au système 5 de stockage, de ranger le couvercle 1 suspendu de manière sensiblement verticale sur une porte 3 battante d'un meuble afin de libérer de la place dans le meuble et ainsi optimiser la place prise par le couvercle 1. Bien entendu, d'autres types d'ustensiles 1 et/ou plusieurs ustensiles 1 comportant une surface principale très grande au regard de son épaisseur (comme un couvercle ou une brosse) ou une courbure marquée (comme une spatule ou une louche) peuvent voir leur rangement optimisé grâce au système 5 de stockage.

On comprend également que l'interstice I entre le support 3 (ou la partie intermédiaire comme par exemple la base 11) et le dispositif 9 de blocage élastique n'a pas à être surdimensionné pour accepter différents formats d'ustensiles 1. En effet, c'est la détente élastique du dispositif 9 de blocage élastique qui s'adapte à l'épaisseur de chaque ustensile 1. Typiquement, dans le cas de l'exemple du couvercle 1 de casserole, plusieurs diamètres différents et/ou plusieurs rayons de concavité différents pourront être reçus par le même système 5 de stockage.

L'interstice I formé peut présenter une distance préférentiellement comprise entre 1 mm et 30 mm. Bien entendu, la distance pourrait être plus courte ou plus longue sans sortir du cadre de l'invention. En outre, l'interstice I peut être de distance constante ou variable entre les deux entretoises 12 du dispositif 7 de fixation. Typiquement, les entretoises 12 pourraient être de longueurs différentes et/ou une partie du dispositif 9 de blocage élastique montée entre les deux entretoises 12 pourrait ne pas être rectiligne sans sortir du cadre de l'invention.

Le dispositif 9 de blocage élastique comporte préférentiellement au moins un élément 10 élastique monté entre deux entretoises 12 du dispositif 7 de fixation. On comprend ainsi qu'un déplacement de chaque ustensile 1 sensiblement perpendiculairement à la longueur des deux entretoises 12 selon la direction D pour l'entrer dans le système 5 de stockage, exerce un étirement de chaque élément 10 élastique apte à s'adapter aux dimensions de chaque ustensile 1 et à plaquer chaque ustensile 1 suspendu vers le support 3 de manière directe ou indirecte.

De manière préférée, chaque élément 10 élastique est monté tendu entre deux entretoises 12 du dispositif 7 de fixation. Par « monté tendu », on entend que chaque élément 10 élastique est monté entre deux entretoises 10 en étant étiré élastiquement, même de manière limitée, afin de pouvoir suspendre chaque ustensile 1 et plaquer ce dernier vers le support 3 de manière réactive, c'est-à-dire avec un déplacement vertical limité apte à laisser chaque élément 10 élastique sensiblement horizontal même après la réception de chaque ustensile 1 de manière suspendue dans le système 5 de stockage. Chaque élément 10 élastique peut comporter une grande variété de matériaux sans sortir du cadre de l'invention suivant le type d'ustensile 1 prévu et s'il est fixé à un endroit normalement caché comme par exemple dans un meuble.

On comprend par exemple que s'il est prévu que le système 5 de stockage soit visible en permanence, un matériau ou un revêtement esthétiquement plus avantageux peut être préférablement choisi. Selon une autre logique, s'il est prévu que le système 5 de stockage soit monté dans un milieu agressif (produit chimique, humidité, etc.), un matériau ou un revêtement chimiquement ou physiquement très stable et dont la friction est constante en milieu sec ou humique peut être préférablement choisi. À titre d'exemple nullement limitatif, l'élément 10 élastique peut ainsi être formé à base de polyester, coton, polyamide, polypropylène, polyéthylène, métal, ou tout autre matériau synthétique ou organique. Chaque élément 10 élastique peut être arrangé sous forme de brin ou de câble formé d'un ensemble de brins protégé ou recouvert d'une gaine en polymère par exemple tressé.

Le dispositif 9 de blocage élastique peut comporter plusieurs éléments 10 élastiques ce qui permet d'améliorer la force de placage et offre une meilleure limitation des déplacements relatifs entre chaque ustensile 1 reçu suspendu dans le système 5 de stockage et le support 3 typiquement dans le cas où ce dernier est mobile. On comprend donc que le dispositif 9 de blocage élastique forme ainsi plusieurs moyens de réception élastiques à des niveaux différents (deux ou plus) sensiblement perpendiculaires à la longueur L des entretoises 12. Bien entendu, les niveaux différents peuvent ne pas être à l'aplomb l'un de l'autre, c'est-à-dire que chaque niveau peut être à une valeur différente par rapport à la longueur L de chaque entretoise 12 et/ou par rapport à la direction D d'introduction de l'autre niveau.

Typiquement, dans les exemples illustrés aux figures 1 à 4, le dispositif 9 de blocage élastique comporte un (ou plusieurs) élément(s) 10 élastique monté(s) entre les entretoises 12 par l'intermédiaire d'évidements 13 préférentiellement traversants. Dans tous les exemples illustrés aux figures 1 à 4, chaque élément 10 élastique forme, seul ou en combinaison avec un autre 10, deux niveaux différents de réception élastiques à base d'un cordon du type sandow. Un tel cordon est connu pour les machines de musculation ou pour former des tendeurs. Ainsi, généralement, un cordon du type sandow comporte un câble formé de brins élastiques et protégé coaxialement par une membrane externe en étoffe élastique très résistante à l'usure. Bien entendu, chaque élément 10 élastique pourrait être de nature différente voire deux éléments 10 élastiques être différents entre eux pour par exemple présenter deux coefficients de friction différents et/ou deux effets esthétiques différents sans sortir du cadre de l'invention.

En outre, le dispositif 9 de blocage élastique peut également comporter au moins un élément 8 rigide destiné par exemple à fixer l'élément 10 élastique ou à servir de butée pour chaque ustensile 1 suspendu. Ainsi, cet élément 8 rigide peut comporter une grande variété de matériaux sans sortir du cadre de l'invention suivant le type d'ustensile 1 prévu et s'il est fixé à un endroit normalement caché comme par exemple dans un meuble. Typiquement, une goupille ou une agrafe peut permettre à au moins une partie de l'élément 10 élastique d'être attaché à une des entretoises 12. Il est également possible, qu'une plaque de protection soit montée intercalée entre deux éléments 10 élastiques pour ne pas les détériorer par contact contre chaque ustensile 1 suspendu et/ou qu'une plaque de fixation soit utilisée à au moins une extrémité d'un élément 10 élastique pour solidariser ce dernier à au moins une entretoise 12 et/ou qu'un revêtement rigide de protection, tel qu'un tube ou une pièce en U, soit monté sur chaque élément 10 élastique pour ne pas le détériorer par contact contre chaque ustensile 1 suspendu.

On comprend par exemple que s'il est prévu que le système 5 de stockage soit visible en permanence, un matériau ou un revêtement esthétiquement plus avantageux pour l'élément 8 rigide peut être préférablement choisi. Selon une autre logique, s'il est prévu que le système 5 de stockage reçoive des types d'ustensiles 1 suspendu très rugueux (surface abrasive, bord tranchant, etc.), un matériau ou un revêtement pour l'élément 8 rigide très dur et/ou très résistant mécaniquement peut être préférablement choisi. À titre d'exemple nullement limitatif, l'élément 8 rigide peut être du même type que le dispositif 7 de fixation et peut ainsi être formé à base de métal tel que de l'aluminium ou de l'acier inoxydable, de bois tel que du bambou, de plastique, de verre, de cristal, de pierre, de céramique comme du granit en terre cuite, de la porcelaine ou de la faïence.

Un premier mode de réalisation de système 5 de stockage selon l'invention est illustré à la figure 1. Le dispositif 7 de fixation est formé par une platine monobloc formant une base 11 et deux entretoises 12 montées sensiblement perpendiculairement par rapport à chaque extrémité de la base 11. Le dispositif 9 de blocage élastique forme deux niveaux différents de réception élastiques à base d'un cordon 10 unique du type sandow. Le cordon 10 forme une boucle montée dans respectivement deux évidements 13 ménagés dans chacune des entretoises 12.

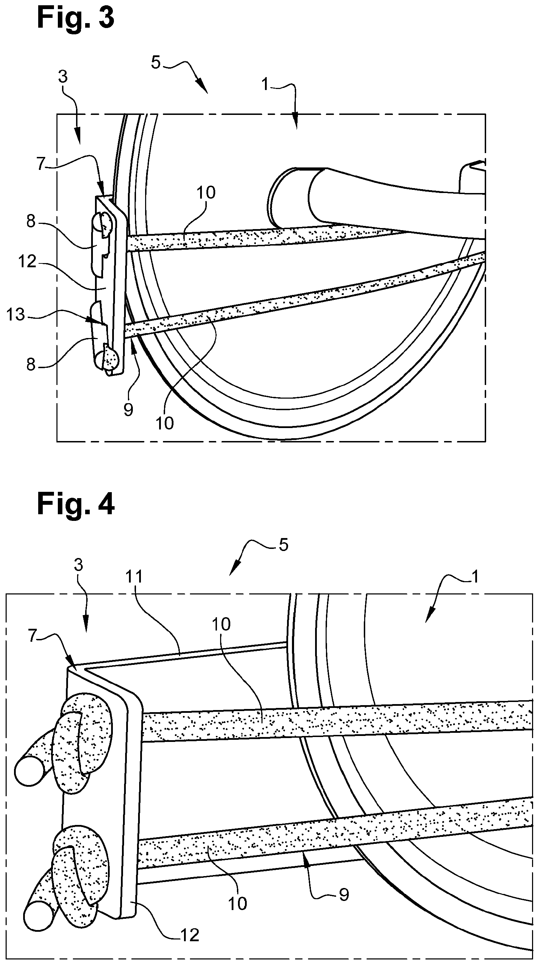

Un deuxième mode de réalisation de système 5 de stockage selon l'invention est illustré aux figures 2 et 3. Le dispositif 7 de fixation est formé par une platine monobloc formant une base 11 et deux entretoises 12 montées sensiblement perpendiculairement par rapport à chaque extrémité de la base 11. Le dispositif 9 de blocage élastique forme deux niveaux différents de réception élastiques à base de deux cordons 10 indépendants du type sandow. Chaque cordon 10 est monté respectivement dans un évidement 13 ménagé dans chacune des entretoises 12 à l'aide d'une agrafe 8.

Selon une variante du deuxième mode de réalisation illustré à la figure 4, chaque cordon 10 est monté respectivement dans un évidement 13 ménagé dans chacune des entretoises 12 sans l'aide d'un élément 8 rigide mais par simple nouage de chaque extrémité du cordon 10 après son passage dans son évidement 13 associé.

L'invention n'est pas limitée aux modes de réalisation et variantes présentés et d'autres modes de réalisation et variantes apparaîtront clairement à l'homme du métier. Ainsi, par exemple, les modes de réalisation et variantes sont combinables entre eux sans sortir du cadre de l'invention. En outre, l'orientation des entretoises 12 par rapport à sa base 11 associée ne saurait se limiter à un angle droit. L'angle pourrait ainsi être plus grand ou plus petit que quatre-vingt-dix degrés et/ou chaque angle être différent par rapport à sa base 11 associée sans sortir du cadre de l'invention.

Enfin, sans sortir du cadre de l'invention, il peut être prévu que chaque élément 10 élastique soit ménagé dans au moins une des entretoises 12 tel qu'un ressort hélicoïdal avec ou sans une course minimale limitée par une butée pour maintenir un interstice I minimal ou une sangle semi-rigide avec ou sans une tige de support le long de laquelle glisse la partie flexible pour maintenir un interstice I minimal. Il peut être également prévu que l'entretoise 12 semi-rigide travaille en flexion lors de l'insertion de l'ustensile 1. Ainsi, entre les entretoises 12, au moins un élément 8 rigide est monté et reçoit un (ou plusieurs) ustensile(s) 1 suspendu en formant avec chaque élément 10 élastique un (ou plusieurs) niveau(x) de réception élastique comme expliqué ci-dessus. On comprend alors que ce sont les entretoises 12 qui auraient le rôle de se déformer pour adapter le déplacement élastique de placage de chaque élément 8 rigide. Il est également immédiat que la modification élastique de la distance de l'interstice I adapté à chaque ustensile 1 reçu suspendu dans le système 5 de stockage serait orientée sensiblement le long de la longueur L des entretoises 12. Bien entendu, comme expliqué ci-dessus, cette variante des éléments 10 élastiques n'empêche pas qu'au moins un des niveaux de réception élastique reste formé par un des modes de réalisation ou variantes cités précédemment.

## Revendications

1. Système (5) de stockage pour au moins un ustensile (1), **caractérisé en ce qu'**il comporte un dispositif (7) de fixation destiné à être solidarisé à un support (3) et comprenant au moins deux entretoises (12) dont une dimension, appelée longueur (L), est destinée à former un interstice (I) par rapport au support pour permettre l'introduction de l'ustensile (1) entre les entretoises (12) du système (5) de stockage perpendiculairement (D) par rapport à la longueur (L) des entretoises (12), et un dispositif (9) de blocage élastique de l'ustensile (1) monté entre deux entretoises (12) du dispositif (7) de fixation et destiné à retenir suspendu l'ustensile (1) par une force élastique en opposition au poids de l'ustensile (1) afin de plaquer élastiquement l'ustensile (1) suspendu vers le support (3).

2. Système (5) de stockage selon la revendication précédente, dans lequel l'interstice (I) formé présente une distance comprise entre 1 mm et 30 mm.

3. Système (5) de stockage selon la revendication 1 ou 2, dans lequel le dispositif (7) de fixation comporte au moins une base (11) destinée à fixer le système (5) de stockage au support (3).

4. Système (5) de stockage selon la revendication précédente, comportant une base (11) séparée pour chaque entretoise (12).

5. Système (5) de stockage selon la revendication 3 ou 4, dans lequel chaque base (11) est fixée au support (3) par collage, par vissage, par vide relatif ou par attraction magnétique.

6. Système (5) de stockage selon l'une quelconque des revendications précédentes, dans lequel le dispositif (9) de blocage élastique comporte au moins un élément (10) élastique monté entre deux entretoises (12) du dispositif (7) de fixation.

7. Système (5) de stockage selon l'une quelconque des revendications précédentes, dans lequel le dispositif (9) de blocage élastique comporte au moins un élément (10) élastique aménagé dans au moins une des entretoises (12) du dispositif (7) de fixation.

8. Système (5) de stockage selon la revendication 6 ou 7, dans lequel le dispositif (9) de blocage élastique comporte en outre au moins un élément (8) rigide destiné à fixer l'élément (10) élastique ou à servir de butée pour l'ustensile (1) suspendu.

9. Système (5) de stockage selon l'une quelconque des revendications 6 à 8, dans lequel le dispositif (9) de blocage élastique comporte plusieurs éléments (10) élastiques.

10. Système (5) de stockage selon l'une quelconque des revendications précédentes, dans lequel la distance (E) entre deux entretoises (12) du dispositif (7) de fixation entre lesquelles est reçu suspendu chaque ustensile (1) est comprise entre 15 cm et 50 cm.

11. Assemblage d'un support (3) avec un système (5) de stockage selon l'une quelconque des revendications précédentes, le support (3) étant un mur ou un ouvrant.
